# EUROPÄISCHE PATENTSCHRIFT

(11) **EP 1 897 061 B1**
(45) Veröffentlichungstag und Bekanntmachung des Hinweises auf die Patenterteilung: **26.11.2008**
(21) Anmeldenummer: 06761697.9
(22) Anmeldetag: 23.06.2006
(51) Int. Cl.: G06T 15/00

(54) **VERFAHREN UND VORRICHTUNG ZUR 3D-NAVIGATION AUF SCHICHTBILDERN**
METHOD AND DEVICE FOR 3D-NAVIGATION ON LAYERS OF IMAGES
PROCEDE ET DISPOSITIF DE NAVIGATION TRIDIMENSIONNELLE DANS DES IMAGES EN COUCHES

(30) Priorität: 25.06.2005 DE 102005029903
(43) Veröffentlichungstag der Anmeldung: 12.03.2008
(73) Patentinhaber: Universitätsklinikum Hamburg-Eppendorf, 20246 Hamburg (DE)
(72) Erfinder: HÖHNE, Karl-Heinz, 25421 Pinneberg (DE); LEUWER, Rudolf, 47799 Krefeld (DE); PETERSIK, Andreas, 22395 Hamburg (DE); PFLESSER, Bernhard, 22147 Hamburg (DE); POMMERT, Andreas, 21614 Buxtehude (DE); TIEDE, Ulf, 21465 Wentdorf (DE)
(74) Vertreter: Schupfner, Georg
(86) Internationale Anmeldenummer: PCT/DE2006/001077
(87) Internationale Veröffentlichungsnummer: WO 2007/000144

(56) Entgegenhaltungen:
- US-A1- 2004 015 070
- MCBETH P B ET AL: "Robotics in neurosurgery" AMERICAN JOURNAL OF SURGERY, PAUL HOEBER, NEW YORK, NY, US, Bd. 188, Nr. 4, Oktober 2004 (2004-10), Seiten 68-75, XP004598229 ISSN: 0002-9610
- PFLESSER B ET AL: "Volume cutting for virtual petrous bone surgery" COMPUTER AIDED SURGERY, TAYLOR & FRANCIS INC., PHILADELPHIA, PA, US, Bd. 7, Nr. 2, 2002, Seiten 74-83, XP002375549 ISSN: 1092-9088 in der Anmeldung erwähnt
- KECHAGIAS L ET AL: "Virtual drilling - sculpturing in 3-D volumes" PROCEEDINGS OF THE 23RD. ANNUAL INTERNATIONAL CONFERENCE OF THE IEEE ENGINEERING IN MEDICINE AND BIOLOGY SOCIETY. 2001 CONFERENCE PROCEEDINGS. (EMBS). INSTANBUL, TURKEY, OCT. 25 - 28, 2001, ANNUAL INTERNATIONAL CONFERENCE OF THE IEEE ENGINEERING IN M, Bd. VOL. 1 OF 4. CONF. 23, 25. Oktober 2001 (2001-10-25), Seiten 2513-2519, XP010592166 ISBN: 0-7803-7211-5

## Beschreibung

Die Erfindung betrifft eine Vorrichtung und ein Verfahren zur Darstellung von 2D-Schichtbildern innerer Strukturen. Die Erfindung ermöglicht die 3D-Darstellung der körperlichen Ausdehnung eines Werkzeuges in 2D-Schichtbildern innerer Strukturen und die Darstellung von Veränderungen an den inneren Strukturen. Insbesondere ist es Gegenstand der Erfindung, in Realzeit auf zweidimensionalen (2D) computergenerierten Abbildungen und ggf. gleichzeitig auch mit computergenerierten visualisierten dreidimensionalen (3D) Modellen den Fortschritt einer materialabtragenden Operation darzustellen, wobei die Einwirkung des Operationswerkzeuges, die dreidimensionale Anordnung des Operationswerkzeuges relativ zu einem oder mehreren 2D Schichtbildern und insbesondere beides visualisiert werden. Die Erfindung kann zur Vorbereitung, Durchführung, Aufzeichnung, Wiedergabe, Nachbereitung oder zum Erlernen eines chirurgischen Eingriffes genutzt werden.

Gegenwärtig betrachten Chirurgen zur Vorbereitung und/oder während eines chirurgischen Eingriffes mehrere statische Ansichten des Operationsraums eines Patienten. Solche Daten können durch schnittbildgebende Verfahren wie die Computer-Tomographie (CT), Magnetresonanz-Tomographie (MRT), Ultraschall, Positronen-Emissions-Tomographie (PET) oder Kombinationen von diesen erzeugt werden. Jede dieser Techniken erzeugt eine ebene gitterartige Anordnung (Matrix) von Werten für jede einzelne einer Aufeinanderfolge von Schichten eines Objektes. Üblicherweise ist das feste Objekt ein menschlicher Körper oder ein Teil davon, obwohl das Verfahren gleichermaßen auch auf andere natürliche oder künstliche Körper anwendbar ist.

Im Falle einer CT-Abtastung wäre der physikalische Wert der Koeffizient einer Röntgenstrahlungs-Absorption. Bei einer MRT-Bildgebung wäre der physikalische Wert die Spin/Spin- oder die Spin/Gitter-Relaxationszeit. In jedem Falle reflektieren die gemessenen physikalischen Werte die Änderungen in der Zusammensetzung, Dichte oder Oberflächeneigenschaften der darunterliegenden physikalischen Strukturen.

Da aus den herkömmlichen Bildgebungsverfahren nur zweidimensionale Schichtbilder zugänglich sind, müssen die Chirurgen die tatsächliche dreidimensionale Lage und Form von gewünschten inneren Strukturen aus den 2D-Bildem ableiten, die sie betrachten. Infolgedessen sind 3D-Modelle entwickelt worden, die die inneren Strukturen und insbesondere die Organe des Operationsgebietes zeigen. Dass aus durch medizinische Aufnahmeverfahren gewonnenen 2D-Schichtbildern 3D-Modelle generierbar sind, beschreiben z.B. die US 2004/015070 und P. B. MCBETH et al in "Robotics in neurosurgery" American Journal of Surgery, Paul Hoeber, New York, NY, US, Bd. 188, Nr. 4, Oktober 2004, Seiten 68 - 75.

Solche Modelle werden z.B. für die Navigationsunterstützung während einer realen Operation benutzt. Hierbei wird die reale Position der Spitze des Werkzeuges mit bekannten Verfahren auf das Computermodell abgebildet, so dass z.B. die entsprechenden sagittalen, coronalen und transversalen Schichten, die durch diesen Punkt verlaufen, dargestellt werden. Dabei ist es dem Chirurgen aber weder möglich, die dreidimensionale Lage und Orientierung seines Werkzeugs in Relation zu den Schichten zu verstehen noch die bereits abgetragene bzw. bearbeitete Region zu erkennen.

Eine Aufgabe der vorliegenden Erfindung besteht darin, ein System zu schaffen, das den Fortschritt einer realen oder simulierten bohrenden oder fräsenden Operation auf 2D-Schichten und ggf. gleichzeitig auch auf 3D-Ansichten erkennbar macht. Insbesondere soll in Echtzeit auf den Schichtbildern die abgetragene Region wie auch das Werkzeug in seiner dreidimensionalen Position und Orientierung dargestellt werden, um den Verlauf und die Wirkung des Operationswerkzeugs in Raum und Zeit abzubilden, zu archivieren und ggf. zu einem späteren Zeitpunkt wiederzugeben.

Die vorliegende Erfindung ist durch die unabhängigen Ansprüche gekennzeichnet. Bevorzugte Ausführungsformen sind Gegenstand der Unteransprüche bzw. nachfolgend beschrieben.

Im Einzelnen ist Gegenstand der Erfindung ein Verfahren zur Darstellung von 2D-Schichtbildern innerer Strukturen umfassend die Darstellung in den 2D-Schichtbildern
- der körperlichen Ausdehnung eines 3D-Werkzeuges und dessen Bewegung in den inneren Strukturen und/oder
- von Veränderungen an einer oder mehreren inneren Strukturen durch die Einwirkung des Werkzeuges, vorzugsweise beides,
   wobei das Verfahren folgende Schritte umfasst:
- Herstellung eines Datenvolumens definierend die körperliche Ausdehnung der inneren Strukturen durch eine Vielzahl räumlicher Koordinaten und eine Größe, die einem physikalischen Messwert entspricht und jedem durch die Koordinaten beschriebenem Ort zugeordnet ist,
   Generieren einer Vielzahl von Volumenelementen aus dem Datenvolumen, wobei
   - die Volumenelemente jeweils mit Attributen versehbar sind, und die mit Attributen versehenen Volumenelemente ein 3D-Modell der inneren Strukturen darstellen, und
   - zumindest ein Attribut die Zugehörigkeit zu einer inneren Struktur kennzeichnet und deren Visualisierung erlaubt, wobei das Attribut unter Verwendung der Größe, die dem physikalischen Messwert entspricht, durch Segmentierung der Volumenelemente gewinnbar ist, und
- Erfassen der Raumkoordinaten eines Werkzeuges durch eine elektronische Eingabeeinheit und
- Bewegen des Werkzeuges
dadurch gekennzeichnet, dass
- die dargestellten 2D-Schichtbilder den aktiven Bereich des Werkzeugs schneiden und dessen Bewegung folgen,
- die dargestellten 2D-Schichtbilder beliebiger Lage und Orientierung aus dem 3D-Modell unter Abbildung eines Repräsentanten für das Werkzeug bzw. dessen Position extrahiert werden, und
das Verfahren weiterhin zumindest folgende Schritte umfasst ausgewählt aus der Gruppe
(a) oder (b), vorzugsweise aus (a) und (b):

(a) Generieren eines Werkzeuges als 3D-Computer-Simulation und Abbildung des Werkzeuges als 3D-Objekt in dem 2D-Schichtbild einschließlich seiner 3D-Ausrichtung in Bezug auf das 2D-Schichtbild
   und/oder
(b) Versehen zumindest der Volumenelemente, die die bearbeitbaren Teile der inneren Struktur beschreiben, mit einem Attribut, das den Bearbeitungszustand kennzeichnet, Bildung einer Schnittmenge der als bearbeitbar ausgezeichneten Volumenelemente und des vom aktiven Bereich des Werkzeugs, wenn im eingeschalteten Betriebszustand, im Laufe des Bearbeitungsvorgangs überdeckten Volumens, und Markieren der Volumenelemente der Schnittmenge durch Zuweisen des Attributs "bearbeitet", und Darstellen der Schnitte durch die mit dem Attribut "bearbeitet" ausgezeichneten Volumenelemente in den 2D-Schichtbildern als markierte Flächen.

Weiterhin betrifft die Erfindung eine Vorrichtung zur Durchführung obigen Verfahrens, gemäß Anspruch 12 wobei die Vorrichtung aufweist,
(i) eine Bildaufnahmevorrichtung zum Aufnehmen und Erzeugen von volumetrischen dreidimensionalen Bilddaten von inneren Strukturen und zum Abgeben der volumetrischen dreidimensionalen Bilddaten,
(ii) eine Datenverarbeitungsanlage umfassend einen Speicher und einen Prozessor und ein Softwareprogramm zur Herstellung eines Datenvolumens aus den volumetrischen dreidimensionalen Bilddaten, zum Generieren einer Vielzahl von Volumenelementen aus dem Datenvolumen und zum Extrahieren und Darstellen von 2D-Schichtbildern beliebiger Lage und Orientierung aus dem 3D-Modell unter Abbildung eines Repräsentanten für das Werkzeug bzw. dessen Position, wobei die Datenverarbeitungsanlage Werkzeuge als 3D-Computer-Simulation vorhält und deren Auswahl ermöglicht,
(iii) eine elektronische Eingabeeinheit zum Erfassen der Raumkoordinaten des Werkzeuges und
(iv) ein Display zur (a) Abbildung des Werkzeuges als 3D-Objekt in dem 2D-Schichtbild und der 3D-Ausrichtung in Bezug auf das 2D-Schichtbild und (b) Darstellen des Schnittes / der Schnitte durch die mit dem Attribut "bearbeitet" ausgezeichneten Volumenelemente in den 2D-Schichtbildern als markierte Flächen, wobei die Datenverarbeitungsanlage Volumenelemente, die die bearbeitete Struktur beschreiben, das Attribut "bearbeitet" zuweist, wenn der aktive Bereich des Werkzeugs im eingeschalteten Betriebszustand die Volumenelemente schneidet.

Die Größe, die dem physikalischen Messwert entspricht, wird vorzugsweise in eine Helligkeitsinformation umgesetzt, um Volumenelemente bzw. den Schnitt durch die Volumenelemente mit unterschiedlicher Helligkeit abzubilden, wobei die markierten Flächen die Helligkeit, z.B. in einer anderen Farbskala gemäß Markierung wiedergeben.

Als Bildaufnahmevorrichtung sind medizinische Bildaufnahmevorrichtungen wie ein Computer-Tomograph (CT), ein Magnetresonanz-Tomograph (MRT), ein Ultraschall-Gerät oder ein Positronen-Emissions-Tomograph (PET) geeignet.

Die elektronische Eingabeeinheit kann ein Navigationssystem sein, das das reale Werkzeug ortet und in seiner Bewegung und ggf. Größe erfasst, eingesetzt werden oder ein 3D-Eingabegerät, das vorzugsweise eine Kraftruckkopplung auf die Hand des Benutzers ausübt.

Zur Abbildung der 2D-Schichtbilder (und auch der 3D-Bilder) kann eine 3D-Display-Vorrichtung eingesetzt werden, welche Stereobilder darstellt, insbesondere zur Abbildung des 3D-Werkzeuges, wobei stereoskopisch rechte und linke Bilder zumindest des 3D-Werkzeuges angezeigt werden. Vorzugsweise wird das 3D-Modell, ggf. mit Werkzeug, korrespondierend mit dem zugehörigen 2D-Schichtbild auf einem Display dargestellt und weiter bevorzugt von der Datenverarbeitungsanlage solche 2D-Schichtbilder generiert und dann dargestellt, die bei bewegtem Werkzeug stets einen bestimmten Punkt des aktiven Bereichs, etwa dem Arbeitsbereich, des Werkzeugs schneiden.

Gegenstand der Darstellung sind besonders geeignet innere Körperstrukturen und die zu bearbeitenden / bearbeiteten Teile der inneren Strukturen wie Knochen, Knorpel und/oder Zähne bzw. deren Teile. Neben den Strukturen kann auch deren Bearbeitungszustand, sei es real mit Hilfe eines realen Werkzeuges oder simuliert, dargestellt und festgehalten werden auch in seiner zeitlichen Ausprägung bzw. Abfolge.

Gegenüber der herkömmlichen Navigation ergibt sich der Vorteil, dass unabhängig von der jeweiligen Position des Werkzeugs die entfernten Regionen in beliebiger Weise dargestellt werden können. Der Operateur sieht auf dem Bildschirm, insbesondere auch auf den 2D-Schichten, sein Werkzeug in seiner räumlichen Ausprägung in Relation zur Anatomie, was eine entscheidende Hilfe für seine Orientierung darstellt. Darüber hinaus kann der Ablauf der realen Operation quantitativ dokumentiert werden, z. B. auch mit der Möglichkeit nachträglicher Messungen oder nachträglich gewählter beliebig schräger Lage der Schnittebenen.

Es ist allgemein bekannt wie dreidimensionale Darstellungen des Operationsraums eines Patienten zu erhalten sind. Hierzu werden räumliche Sequenzen von oben genannten Schichtbildern zu einer 3D-Matrix der Messwerte zusammengefasst (Bildvolumen), das an jedem Punkt zumindest einen Messwert und ggf. weitere Attribute aufweist. Diese Attribute können z.B. die Zugehörigkeit zu einem Organ oder den Bearbeitungszustand (z.B. abgetragen mit dem Operationswerkzeug / nicht abgetragen mit dem Operationswerkzeug) beschreiben.

Aus einem solchen 3D-Modell lassen sich mit bekannten Verfahren räumliche Ansichten (3D-Darstellung) der inneren Strukturen erzeugen und/oder 2D-Schichtbilder beliebiger Lage und Orientierung extrahieren.

Im Gegensatz zur herkömmlichen Navigation wird bei der vorliegenden Erfindung das Werkzeug nicht als punktförmig angenommen, sondern in seinen dreidimensionalen Eigenschaften erfasst und beschrieben. Dadurch ist es möglich, auch die durch das Werkzeug bearbeiteten Regionen entsprechend der Form des Werkzeugs zu erfassen. Technische Details zur Durchführung der Modifikation des Volumenmodells zur Darstellung der Wirkung eines Operationswerkzeugs kann der Veröffentlichung "Volume cutting for virtual petrous bone surgery" in Comput. Aided Surg. 7, 2 (2002), 74-83 von Bernhard Pflesser, Andreas Petersik, Ulf Tiede, Karl Heinz Höhne und Rudolf Leuwer entnommen werden.

Neben der Navigationsunterstützung kann dasselbe Verfahren auch für das Training und die präoperative Simulation von Operationen auf der Basis des 3D-Modells verwendet werden. Hierbei wird das Werkzeug durch ein dreidimensionales virtuelles Modell repräsentiert, das mit einem 3D-Eingabegerät vom Benutzer geführt werden kann. In einer bevorzugten Ausführungsform übt das 3D-Eingabegerät eine Kraftrückkopplung auf die Hand des Benutzers aus. Ein solches Eingabegerät misst die Position im Raum (3 Koordinaten) sowie die Richtung eines Griffels (Vektor mit 3 Komponenten), an dem das Gerät geführt wird. Ein entsprechendes Programm berechnet aufgrund des 3D-Modells der Anatomie und der Position und Form des Werkzeugs die zu erwartenden Kräfte. Dazu wird eine Reihe von Abtastpunkten auf der Oberfläche des Werkzeugs verwendet, an denen permanent überprüft wird, ob eine Kollision zwischen dem zu bearbeitenden Objekt und dem Werkzeug vorliegt. In dem Fall wird eine Kraft in Richtung der Objektoberfläche induziert, die proportional zur Eindringtiefe ist. Als 3D-Eingabegerät mit Kraftrückkopplung können entsprechende kommerziell vertriebene Geräte wie z.B. das Phantom® Omni von SensAble Technologies, Inc eingesetzt werden.

Das Verfahren der Kraftrückkopplung ist detailliert erläutert in IS4TM 2003: 194-202, "Realistic Haptic Interaction in Volume Sculpting for Surgery Simulation" von Andreas Petersik, Bernhard Pflesser, Ulf Tiede, Karl Heinz Höhne und Rudolf Leuwer.

Die Erfindung wird anhand der beigefügten Figuren erläutert.

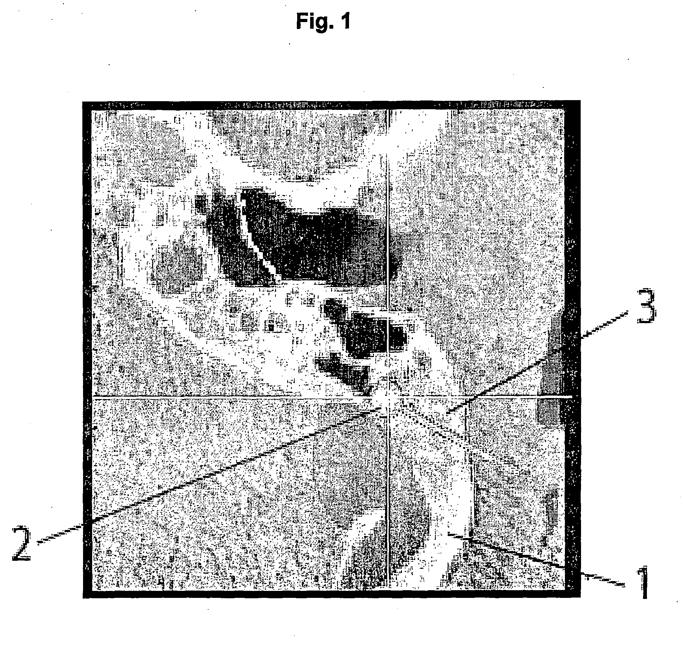

Fig. 1 zeigt ein Schichtbild, das eine Knochenstruktur (1), ein dreidimensionales Bohrwerkzeug (2) und ein im Knochen abgetragenes Bohrvolumen (3) durch farbige Markierung (hier dunkelgrau) darstellt. Das Schichtbild ist ein 2D-Schnitt durch den 3D-Raum. Das Bohrwerkzeug (2) ist als 3D-Körper mit seiner aktuellen 3D-Ausrichtung in Bezug auf den Schnitt im Raum (transversale Schicht) dargestellt.

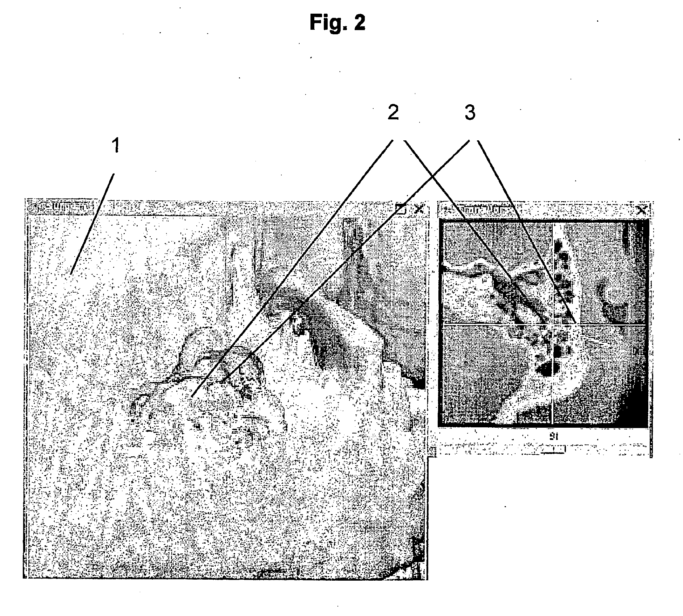

Fig. 2 zeigt zwei Abbildungen. Im Einzelnen sind dargestellt ein transversales Schichtbild (rechts) und ein 3D-Modell berechnet und visualisiert aus dem Datenvolumen. Die nach Maßgabe von Bohrergröße und -bewegung modifizierte Region ist im 3D-Volumenmodell markiert und auch auf dem 2D-Schnittbild angezeigt, ebenso eine dreidimensionale Abbildung des Bohrwerkzeugs (2).

Im Einzelnen wird das erfindungsgemäße Verfahren nachfolgend beispielhaft in Form von Schritten erläutert. Das erfindungsgemäße Verfahren umfasst folgende Schritte:
(1) Es wird eine räumliche Folge von CT-Aufnahmen i.d.R. transversal aufgenommen, um eine Darstellung des Operationsraumes auf Schichtbildern zu erfassen (2D-Bilder).
(2) Aus den Schichtbildern wird ein Bildvolumen (sprich 3D-Matrix) generiert bestehend aus z.B. 512×512×256 adressierbaren Volumenelementen (Voxel), die jeweils mit Intensitätswerten (typischerweise Skala 0-4095) versehen sind.
(3) Zuweisung von Attributen zu den Volumenelementen, wobei zumindest ein Attribut die Zugehörigkeit zu einem bestimmten Objekt festgelegt (Segmentierung). Das Objekt kann dann anhand des Attributs für die Darstellung ausgewählt und visualisiert werden.
(4) Auswahl eines Werkzeuges bzw. eines Werkzeugtyps, z.B. als polygonales 3D-Objekt. Das Werkzeug ist in der Regel skalierbar.
(5) Definition eines aktiven Bereichs (Arbeitsoberfläche, z.B. Bohrkopf) und eines passiven Bereichs (z.B. Schaft) des Werkzeugs.
(6) Aktivieren der Arbeitsoberfläche bzw. Deaktivieren der Arbeitsoberfläche des Werkzeugs.
(7) Bewegung des Werkzeugs im Raum entweder durch Erfassung der Raumdaten eines tatsächlichen Werkzeuges geführt, während einer Operation relativ zum Objekt unter Verwendung herkömmlicher Navigationssysteme, oder eines elektronischen 3D-Eingabegerätes bevorzugt mit Kraftrückkopplung.
   Bei deaktivierter Arbeitsoberfläche kann das Werkzeug durch den freien Raum geführt werden und ggf. zum Abtasten der (im Wesentlichen festen) Körperstrukturen verwendet werden.
(8) Schneiden (Bildung der Schnittmenge zwischen den durch ein Attribut ausgezeichneten Volumenelementen (z.B. Knochen) und dem aktiven Bereich des Werkzeugs.
(9) Markierung dieser Schnittmenge von Volumenelementen durch Zuweisen eines zusätzlichen Attributs "bearbeitet".
(10) Extraktion von 2D-Schichtbildern aus dem 3D-Volumen, vorzugsweise in Richtung zumindest einer Körperachse (transversal, sagittal bzw. koronal), durch das Zentrum der Arbeitsoberfläche oder nach freier Auswahl. Dabei werden die mit "bearbeitet" gekennzeichneten Volumenelemente bevorzugt durch Anfärben unter Beibehaltung der durch das bildgebende Verfahren gelieferten Intensitätswerte visualisiert.
(11) Darstellung des Werkzeugs als mit Methoden der Computergraphik schattiertes 3D-Objekt in seiner räumlichen Beziehung zum 2D-Schichtbild.

## Patentansprüche

1. Verfahren zur Darstellung von 2D-Schichtbildern innerer Strukturen umfassend die Darstellung in den 2D-Schichtbildern
- der körperlichen Ausdehnung eines 3D-Werkzeuges und dessen Bewegung in den inneren Strukturen und/oder
- von Veränderungen an einer oder mehreren inneren Strukturen durch die Einwirkung des Werkzeuges, vorzugsweise beides,
wobei das Verfahren folgende Schritte umfasst,
- Herstellung eines Datenvolumens definierend die körperliche Ausdehnung der inneren Strukturen durch eine Vielzahl räumlicher Koordinaten und eine Größe, die einem physikalischen Messwert entspricht und jedem durch die Koordinaten beschriebenem Ort zugeordnet ist,
- Generieren einer Vielzahl von Volumenelementen aus dem Datenvolumen, wobei
- die Volumenelemente jeweils mit Attributen versehbar sind, und die mit Attributen versehenen Volumenelemente ein 3D-Modell der innerer Strukturen darstellen, und
- zumindest ein Attribut die Zugehörigkeit zu einer inneren Struktur kennzeichnet und deren Visualisierung erlaubt, wobei das Attribut unter Verwendung der Größe, die dem physikalischen Messwert entspricht, durch Segmentierung der Volumenelemente gewinnbar ist,
- Erfassen der Raumkoordinaten eines Werkzeuges durch eine elektronische Eingabeeinheit und
- Bewegen des Werkzeuges
**dadurch gekennzeichnet, dass**
- die dargestellten 2D-Schichtbilder den aktiven Bereich des Werkzeugs schneiden und dessen Bewegung folgen und
- die dargestellten 2D-Schichtbilder beliebiger Lage und Orientierung aus dem 3D-Modell unter Abbildung eines Repräsentanten für das Werkzeug bzw. dessen Position extrahiert werden, und
das Verfahren weiterhin zumindest folgende Schritte umfasst ausgewählt aus der Gruppe a) oder b), vorzugsweise aus a) und b),
a) Generieren eines Werkzeuges als 3D-Computer-Simulation und Abbildung des Werkzeuges als 3D-Objekt in dem 2D-Schichtbild einschließlich seiner 3D-Ausrichtung in Bezug auf das 2D-Schichtbild
und/oder
(b) Versehen zumindest der Volumenelemente, die die bearbeitbaren Teile der inneren Struktur beschreiben, mit einem Attribut, das den Bearbeitungszustand kennzeichnet, Bildung einer Schnittmenge der als bearbeitbar ausgezeichneten Volumenelemente und des vom aktiven Bereich des Werkzeugs, wenn im eingeschalteten Betriebszustand, im Laufe des Bearbeitungsvorgangs überdeckten Volumens, und Markieren der Volumenelemente der Schnittmenge durch Zuweisen des Attributs "bearbeitet", und
Darstellen des/der Schnitte durch die mit dem Attribut "bearbeitet" ausgezeichneten Volumenelemente in dem/den 2D-Schichtbild(ern) als markierte Flächen.

2. Verfahren gemäß Anspruch 1, **dadurch gekennzeichnet, dass** die Größe, die dem physikalischen Messwert entspricht, eine Helligkeitsinformation ist, um Volumenelemente bzw. den 2D-Schnitt durch die Volumenelemente mit unterschiedlicher Helligkeit abzubilden, wobei die markierte Fläche die Helligkeit in einer anderen Farbskala gemäß Markierung wiedergibt.

3. Verfahren gemäß einem der vorhergehenden Ansprüche, **dadurch gekennzeichnet, dass** die inneren Strukturen Körperstrukturen und die zu bearbeitenden / bearbeiteten Teile der inneren Strukturen Knochen, Knorpel und/oder Zähne bzw. deren Teile sind.

4. Verfahren gemäß einem der vorhergehenden Ansprüche, **dadurch gekennzeichnet, dass** die 3D-Matrix räumlicher Koordinaten aus Schichtbildern gewonnen werden, wie sie mit medizinischen Bildaufnahmeverfahren wie Computer-Tomographie CT, Magnetresonanz-Tomographie MRT, Ultraschall, Positronen-Emissions-Tomographie PET oder Kombinationen zugänglich sind.

5. Verfahren gemäß einem der vorhergehenden Ansprüche, **dadurch gekennzeichnet, dass** die elektronische Eingabeeinheit die Raumkoordinaten eines realen Werkzeuges mittels eines Navigationssystems aufnimmt und das Werkzeug durch die abgebildete innere Struktur geführt wird bzw. Teile davon bearbeitet, wobei die Struktur im 3D-Modell einer Abbildung der realen Struktur einschließlich Ihres Bearbeitungszustandes entspricht, und ggf. das reale Werkzeug von dem 3D-Modell eine Information über die Nähe zu einer zu bearbeitenden Struktur oder einer Risikostruktur erhält und dies dem Operateur kenntlich macht.

6. Verfahren gemäß einem der Ansprüche 1 bis 4, **dadurch gekennzeichnet, dass** die elektronische Eingabeeinheit ein 3D-Eingabegerät umfasst, das vorzugsweise eine Kraftrückkopplung auf die Hand des Benutzers ausübt.

7. Verfahren gemäß einem der vorhergehenden Ansprüche, **dadurch gekennzeichnet, dass** die Abbildung der 2D-Schichtbilder mit einer 3D-Display-Vorrichtung erfolgt, welche Stereobilder darstellt, zur Abbildung des 3D-Werkzeuges, wobei stereoskopische rechte und linke Bilder zumindest des 3D-Werkzeuges angezeigt werden.

8. Verfahren gemäß einem der vorhergehenden Ansprüche, **dadurch gekennzeichnet, dass** weiterhin ein 3D-Modell korrespondierend mit zumindest einem 2D-Schichtbild dargestellt wird.

9. Verfahren gemäß einem der vorhergehenden Ansprüche, **dadurch gekennzeichnet, dass** das Werkzeug im 2D-Schichtbild dargestellt wird, wobei 3D-Ausdehung und Orientierung optisch simuliert sind mit Methoden der Computergraphik.

10. Verfahren gemäß einem der vorhergehenden Ansprüche, **dadurch gekennzeichnet, dass** die Bewegung des Werkzeugs in Form von den dargestellten 2D-Schichtbildern aufgezeichnet wird, ggf. in Videosequenzen umgewandelt.

11. Verfahren gemäß einem der vorhergehenden Ansprüche, **dadurch gekennzeichnet, dass** das Verfahren die Schritte beider Gruppen a) und b) umfasst.

12. Vorrichtung, ggf. mehrteilig, zur Darstellung von 2D-Schichtbildern innerer Strukturen umfassend die Darstellung in den 2D-Schichtbildern
- der körperlichen Ausdehnung eines 3D-Werkzeuges und dessen Bewegung in den inneren Strukturen und
- von Veränderungen an einer oder mehreren inneren Strukturen durch die Einwirkung des Werkzeuges, vorzugsweise beides,
wobei die Vorrichtung aufweist,
i) eine Bildaufnahmevorrichtung zum Aufnehmen und Erzeugen von volumetrischen dreidimensionalen Bilddaten von inneren Strukturen und zum Abgeben der volumetrischen dreidimensionalen Bilddaten,
ii) eine Datenverarbeitungsanlage umfassend einen Speicher und einen Prozessor und ein Softwareprogramm
- zur Herstellung eines Datenvolumens aus den volumetrischen dreidimensionalen Bilddaten definierend die körperliche Ausdehnung der inneren Struktur durch eine Vielzahl räumlicher Koordinaten und eine Größe, die einem physikalischen Messwert entspricht und jedem durch die Koordinaten beschriebenem Ort zugeordnet ist,
- zum Generieren einer Vielzahl von Volumenelementen aus dem Datenvolumen, wobei
- die Volumenelemente jeweils mit Attributen versehbar sind, und die mit Attributen versehenen Volumenelemente ein 3D-Modell der inneren Struktur darstellen, und
- zumindest ein Attribut, die Zugehörigkeit zu einer inneren Struktur kennzeichnet und deren Visualisierung erlaubt, wobei das Attribut unter Verwendung der Größe, die dem physikalischen Messwert entspricht, durch Segmementierung der Volumenelemente gewinnbar ist, und
wobei die Datenverarbeitungsanlage Werkzeuge als 3D-Computer-Simulation vorhält und deren Auswahl ermöglicht,
iii) eine elektronische Eingabeeinheit zum Erfassen der Raumkoordinaten des Werkzeuges und zum Bewegen des Werkzeuges relativ zu den inneren Strukturen
iv) ein Display
**dadurch gekennzeichnet, dass**
- die Datenverarbeitungsanlage solche 2D-Schichtbilder aus dem 3D-Modell generiert, die bei bewegtem Werkzeug stets einen bestimmten Punkt des aktiven Bereichs des Werkzeugs schneiden und das Display diese 2D-Schichtbilder darstellt und
- die mit dem Display dargestellten 2D-Schichtbilder beliebiger Lage und Orientierung aus dem 3D-Modell unter Abbildung eines Repräsentanten für das Werkzeug bzw. dessen Position durch die Datenverarbeitungsanlage extrahiert sind,
sowie das Display abbildet:
a) die Abbildung des Werkzeuges als 3D-Objekt in dem 2D-Schichtbild und der 3D-Ausrichtung in Bezug auf das 2D-Schichtbild,
und
b) die Darstellung des/der Schnitte durch die mit dem Attribut "bearbeitet" ausgezeichneten Volumenelemente in dem/den 2D-Schichtbild(ern) als markierte Flächen, wobei die Datenverarbeitungsanlage Volumenelemente, die die bearbeitete Struktur beschreiben, das Attribut "bearbeitet" zuweist, wenn der aktive Bereich des Werkzeugs im eingeschalteten Betriebszustand die Volumenelemente schneidet.

13. Vorrichtung gemäß Anspruch 12, **dadurch gekennzeichnet, dass** die Größe, die dem physikalischen Messwert entspricht, in eine Helligkeitsinformation umgesetzt wird, um Volumenelemente bzw. den Schnitt durch die Volumenelemente mit unterschiedlicher Helligkeit abzubilden, wobei die markierten Flächen die Helligkeit in einer anderen Farbskala gemäß Markierung wiedergeben.

14. Vorrichtung gemäß einem der Ansprüche 12 oder 13 , **dadurch gekennzeichnet, dass** die Bildaufnahmevorrichtung eine medizinische Bildaufnahmevorrichtung wie ein Computer-Tomograph CT, ein Magnetresonanz-Tomograph MRT, ein Ultraschall-Gerät, ein Positronen-Emissions-Tomograph PET ist.

15. Vorrichtung gemäß einem der Ansprüche 12 bis 14, **dadurch gekennzeichnet, dass** die elektronische Eingabeeinheit ein Navigationssystem umfasst, das das reale Werkzeug ortet.

16. Vorrichtung gemäß einem der Ansprüche 12 bis 14, **dadurch gekennzeichnet, dass** die elektronische Eingabeeinheit ein 3D-Eingabegerät umfasst, das vorzugsweise eine Kraftrückkopplung auf die Hand des Benutzers ausübt.

17. Vorrichtung gemäß einem der Ansprüche 12 bis 16, **dadurch gekennzeichnet, dass** die Abbildung der 2D-Schichtbilder mit einer 3D-Display-Vorrichtung erfolgt, welche Stereobilder darstellt, zur Abbildung des 3D-Werkzeuges, wobei stereoskopische rechte und linke Bilder zumindest des 3D-Werkzeuges angezeigt werden.

18. Vorrichtung gemäß einem der Ansprüche 12 bis 17, **dadurch gekennzeichnet, dass** auf dem Display ein 3D-Modell korrespondierend mit dem zugehörigen 2D-Schichtbild dargestellt wird.

## Claims

1. A method for displaying two-dimensional layer images of internal structures, including the representation in the 2D layer images
- of the physical dimension of a 3D tool and its movement in the internal structures and/or
- of changes to one or more internal structures caused by the tool, preferably both,
wherein the method includes the following steps:
- producing a data volume that defines the physical dimension of the internal structures by a plurality of spatial coordinates and a variable that corresponds to a physical measurement value and is assigned to each site that is described by the coordinates,
- generating a plurality of volume elements from the data volume, wherein
- attributes are assignable to each of the volume elements, and the volume elements with assigned attributes represent a 3D model of the internal structures, and
- at least one attribute characterises the association with an internal structure and enables its visualization, wherein the attribute is obtainable by segmenting the volume elements using the variable that corresponds to the physical measurement value,
- capturing the spatial coordinates of a tool via an electronic input device and
- moving the instrument
**characterised in that**
- the displayed 2D layer images intersect the active area of the tool and follow its movement, and
- the displayed 2D layer images of any position and orientation are extracted from the 3D model including mapping a representative of the tool and/or its position, and
the method further includes at least the following steps selected from group a) or b), preferably from both a) and b),
a) generation of a tool as a 3D computer simulation and mapping of the tool as a 3D object in the 2D layer image, including its 3D alignment relative to the 2D layer image
and/or
b) providing at least those volume elements describing the parts of the internal structures that are able to be processed with an attribute indicating the processing status, creating an intersection of the volume elements that are designated as being capable of being processed and of the volume that is concealed by the active area of the tool when it is operating during the processing operation, and marking the volume elements of the intersection by assigning the "processed" attribute, and
displaying the cut or cuts through the volume elements that are identified with the "processed" attribute as marked surfaces in the 2D layer image(s).

2. The method according to claim 1, **characterised in that** the variable that corresponds to the physical measurement value is an item of brightness information for displaying volume elements or the 2D cut through the volume elements with different brightness levels, wherein the marked surface reproduces the brightness according to the marking on a different colour scale.

3. The method according to any of the previous claims, **characterised in that** the internal structures are body structures and the parts of the internal structures that have been / are to be processed are bone, cartilage and/or teeth or parts thereof.

4. The method according to any of the previous claims, **characterised in that** the 3D matrix of spatial coordinates is derived from layer images, such as are provided by medical imaging methods such as computer tomography CT, magnetic resonance tomography MRT, ultrasound, positron emission tomography PET, or combinations thereof.

5. The method according to any of the previous claims, **characterised in that** the electronic input unit records the spatial coordinates of a real tool via a navigation system and the tool is guided through the mapped internal structure and processes parts thereof, wherein the structure in the 3D model corresponds to an image of the real structure including its processing status, and the real tool optionally receives an information about its proximity to a structure or a risk structure from the 3D model, and informs the operator of this.

6. The method according to any of claims 1 to 4, **characterised in that** the electronic input unit includes a 3D input device that preferably exerts a force feedback on the hand of the user.

7. The method according to any of the previous claims, **characterised in that** the 2D layer images are displayed with a 3D display device that shows stereo images for displaying the 3D tool, wherein stereoscopic right and left images of at least the 3D tool are shown.

8. The method according to any of the previous claims, **characterised in that** additionally a 3D model is represented corresponding to at least one 2D layer image.

9. The method according to any of the previous claims, **characterised in that** the tool is shown in the 2D layer image, wherein the 3D dimension and orientation are optically simulated with computer graphics methods.

10. The method according to any of the previous claims, **characterised in that** the movement of the tool is recorded in the form of the 2D layer images shown, optionally converted into video sequences.

11. The method according to any of the previous claims, **characterised in that** the method includes the steps of both groups a) and b).

12. A device, optionally multiple-part, for displaying 2D layer images of internal structures, including the representation in the 2D layer images
- of the physical dimension of a 3D tool and its movement in the internal structures and
- of changes to one or more internal structures caused by the tool, preferably both,
wherein the device comprises
i) an imaging device for recording and generating volumetric three-dimensional image data of internal structures and for outputting volumetric three-dimensional image data,
ii) a data processing system including a memory and a processor and a software program
- for producing a data volume from the volumetric three-dimensional image data defining the physical dimension of the internal structure via a plurality of spatial coordinates and a variable that corresponds to a physical measurement value and is assigned to each site that is described by the coordinates,
- for generating a plurality of volume elements from the data volume, wherein
- the volume elements, each are associated with attributes, and the volume elements associated with attributes represent a 3D model of the internal structure, and
- at least one attribute characterises the association with an internal structure and enables its representation, wherein the attribute is obtainable by segmenting the volume elements using the variable that corresponds to the physical measurement value, and
wherein the data processing system holds tools as 3D computer simulation, and enables them to be selected,
iii) an electronic input unit for entering the spatial coordinates of the tool and for moving the tool relative to the internal structures, and
iv) a display
**characterised in that**
- the data processing system generates those 2D layer images from the 3D model that constantly intersect a certain point of the active area of the tool when the tool is moved, and the display shows these 2D layer images, and
- the 2D layer images of any position and orientation shown on the display are extracted from the 3D model by the data processing system including mapping a representation of the tool and/or its position,
and the display shows:
a) the image of the tool as a 3D object in the 2D layer image and of the 3D alignment relative to the 2D layer image,
and
b) the representation of the section or sections through the volume elements that are identified with the "processed" attribute as marked surfaces in the 2D layer image(s), wherein the data processing system assigns the "processed" attribute to volume elements that describe the structure that has been processed when the active area of the tool intersects the volume elements in the switched on operating mode.

13. The device according to claim 12, **characterised in that** the variable that corresponds to the physical measurement value is converted to an item of brightness information to represent volume elements or the section through the volume elements with differing levels of brightness, wherein the marked surfaces reflect the brightness on a different colour scale depending on marking.

14. The device according to either of claims 12 or 13, **characterised in that** the imaging devices is a medical imaging device such as a computer tomograph CT, a magnetic resonance tomograph MRT, an ultrasound device, or a positron emission tomograph PET.

15. The device according to any of claims 12 to 14, **characterised in that** the electronic input unit includes a navigation system that locates the real tool.

16. The device according to any of claims 12 to 14, **characterised in that** the electronic input unit includes a 3D input device, which preferably exerts a force feedback on the user's hand.

17. The device according to any of claims 12 to 16, **characterised in that** the display of the 2D layer images takes place via a 3D display device that shows stereo images for displaying the 3D tool, wherein stereoscopic right and left images of at least of the 3D tool are displayed.

18. The device according to any of claims 12 to 17, **characterised in that** a 3D model is shown on the display corresponding with the associated 2D layer image.

## Revendications

1. Procédé de représentation d'images en couches bidimensionnelles de structures internes comprenant la représentation dans les images en couches bidimensionnelles
- de l'extension corporelle d'un outil tridimensionnel et de son mouvement dans les structures internes et/ou
- des modifications intervenant sur une ou plusieurs structures internes sous l'action de l'outil, de préférence de deux, le procédé comprenant les étapes suivantes :
- production d'un volume de données définissant l'extension corporelle des structures internes grâce à une multitude de coordonnées spatiales et une grandeur, qui correspond à une valeur de mesure physique et est associée à chaque endroit décrit par les coordonnées,
- génération d'une multitude d'éléments de volumes à partir du volume de données, où
- les éléments de volume peuvent être chacun dotés d'attributs et les éléments de volume dotés d'attributs représentent un modèle tridimensionnel des structures internes, et
- au moins un attribut caractérise l'appartenance à une structure interne et permet sa visualisation, l'attribut pouvant être extrait par segmentation des éléments du volume en utilisant la grandeur qui correspond à la valeur de mesure physique,
- saisie des coordonnées spatiales d'un outil par le biais d'un périphérique d'entrée électronique et
- déplacement de l'outil
**caractérisé en ce que**
- les images en couches bidimensionnelles représentées coupent la zone active de l'outil et suivent son mouvement et
- les images en couches bidimensionnelles représentées, de position et d'orientation quelconques, sont extraites du modèle tridimensionnel tout en reproduisant un représentant pour l'outil ou sa position, et
le procédé comprenant en outre au moins les étapes suivantes choisies dans le groupe a) ou b), de préférence a) et b),
a) génération d'un outil sous forme de simulation informatique en trois dimensions et reproduction de l'outil sous forme d'objet tridimensionnel dans l'image en couches bidimensionnelle incluant son orientation tridimensionnelle par rapport à l'image en couches bidimensionnelle
et/ou
b) dotation au moins des éléments de volume, qui décrivent les parties étudiées de la structure interne, d'un attribut qui caractérise l'état d'étude, formation d'un ensemble d'intersection entre les éléments de volume **caractérisés** comme étudiables et le volume couvert par la zone active de l'outil, quand il est en état de marche, au cours de l'opération d'étude, et
marquage des éléments de volume de l'ensemble d'intersection par l'affectation de l'attribut « étudié », et
représentation du ou des coupes des éléments de volume **caractérisés par** l'attribut « étudié » dans la ou les images en couches bidimensionnelles en tant que surfaces marquées.

2. Procédé selon la revendication 1, **caractérisé en ce que** la grandeur, qui correspond à la valeur de mesure physique, est une information de luminosité pour reproduire des éléments de volume ou la coupe bidimensionnelle des éléments de volume avec une luminosité différente, la surface marquée reproduisant la luminosité dans une autre gamme chromatique en fonction du marquage.

3. Procédé selon l'une des revendications précédentes, **caractérisé en ce que** les structures internes sont des structures corporelles et les parties à étudier/étudiées des structures internes sont les os, le cartilage et/ou les dents ou leurs parties.

4. Procédé selon l'une des revendications précédentes, **caractérisé en ce que** les matrices tridimensionnelles des coordonnées spatiales sont extraites des images en couches, telles qu'elles sont accessibles avec des procédés de prise de clichés médicaux comme la tomodensitométrie (TDM), l'imagerie par résonance magnétique (IRM), l'échographie, la tomographie par émission de positrons (TEP) ou leurs combinaisons.

5. Procédé selon l'une des revendications précédentes, **caractérisé en ce que** le périphérique d'entrée électronique prend les coordonnées spatiales d'un outil réel au moyen d'un système de navigation et l'outil est guidé à travers la structure interne reproduite ou étudie des parties de celle-ci, où la structure en modèle tridimensionnel correspond à une reproduction de la structure réelle, y compris son état d'étude, et le cas échéant, l'outil réel obtient du modèle tridimensionnel une information concernant la proximité d'une structure à étudier ou d'une structure à risques et le fait savoir à l'opérateur.

6. Procédé selon l'une des revendications 1 à 4, **caractérisé en ce que** le périphérique d'entrée électronique comprend un appareil d'entrée tridimensionnelle, qui exerce de préférence une rétroaction de force sur la main de l'utilisateur.

7. Procédé selon l'une des revendications précédentes, **caractérisé en ce que** la reproduction des images en couches bidimensionnelles s'effectue avec un dispositif d'affichage tridimensionnel, qui représente des vues stéréoscopiques, pour la reproduction de l'objet tridimensionnel, où les vues stéréoscopiques de droite et de gauche au moins de l'objet tridimensionnel sont montrées.

8. Procédé selon l'une des revendications précédentes, **caractérisé en ce qu'**un modèle tridimensionnel correspondant à au moins une image en couches bidimensionnelle est également représenté.

9. Procédé selon l'une des revendications précédentes, **caractérisé en ce que** l'outil est représenté dans une image en couches bidimensionnelle, l'extension tridimensionnelle et l'orientation étant simulées optiquement par des méthodes d'infographie.

10. Procédé selon l'une des revendications précédentes, **caractérisé en ce que** le mouvement de l'outil est enregistré sous la forme des images en couches bidimensionnelles représentées, le cas échéant transformé en séquences vidéo.

11. Procédé selon l'une des revendications précédentes, **caractérisé en ce que** le procédé comprend les étapes des deux groupes a) et b).

12. Dispositif, le cas échéant en plusieurs parties, pour la représentation d'images en couches bidimensionnelles de structures internes, comprenant la représentation dans des images en couches bidimensionnelles
- de l'extension corporelle d'un outil tridimensionnel et de son mouvement dans les structures internes et/ou
- des modifications intervenant sur une ou plusieurs structures internes sous l'action de l'outil, de préférence de deux,
le dispositif comprenant :
i) un dispositif de prise de clichés pour prendre et produire des données graphiques tridimensionnelles volumétriques des structures internes et pour émettre les données graphiques tridimensionnelles volumétriques,
ii) une installation de traitement des données comprenant une mémoire, un processeur et un logiciel
- pour la production d'un volume de données à partir des données graphiques tridimensionnelles volumétriques définissant l'extension corporelle de la structure interne par une multitude de coordonnées spatiales et une grandeur, qui correspond à une valeur de mesure physique et est associée à chaque endroit décrit par les coordonnées,
- pour la génération d'une multitude d'éléments de volume à partir du volume de données, où
- les éléments de volume peuvent être dotés chacun d'attributs et les éléments de volume dotés d'attributs représentent un modèle tridimensionnel de la structure interne, et
- au moins un attribut caractérise l'appartenance à une structure interne et permet sa visualisation, l'attribut pouvant être extrait par segmentation des éléments de volume en utilisant la grandeur qui correspond à la valeur de mesure physique,
l'installation de traitement des données disposant des outils sous forme de simulation informatique tridimensionnelle et permettant leur sélection,
iii) un périphérique d'entrée électronique pour la saisie des coordonnées spatiales de l'outil et le déplacement de l'outil par rapport aux structures internes,
iv) un moniteur
**caractérisé en ce que**
- l'installation de traitement des données génère, à partir du modèle tridimensionnel, des images en couches bidimensionnelles, qui coupent la zone active de l'outil toujours en un point déterminé lors du déplacement de l'outil, et le moniteur représente ces images en couches bidimensionnelles, et
- les images en couches bidimensionnelles représentées par le moniteur, de position et d'orientation quelconques, sont extraites du modèle tridimensionnel par l'installation de traitement des données tout en reproduisant un représentant pour l'outil ou sa position,
et le moniteur affiche :
a) la reproduction de l'outil sous forme d'objet tridimensionnel dans l'image en couches bidimensionnelle et son orientation tridimensionnelle par rapport à l'image en couches bidimensionnelle,
et
b) la représentation du ou des coupes des éléments de volume **caractérisés par** l'attribut « étudié » dans la ou les images en couches bidimensionnelles en tant que surfaces marquées, l'installation de traitement des données affectant l'attribut « étudié » aux éléments de volume qui décrivent la structure étudiée, quand la zone active de l'outil coupe les éléments de volume quand il est en état de marche.

13. Dispositif selon la revendication 12, **caractérisé en ce que** la grandeur qui correspond à la valeur de mesure physique est transformée en une information de luminosité pour reproduire les éléments de volume ou la coupe des éléments de volume avec une luminosité différente, les surfaces marquées reproduisant la luminosité dans une autre gamme chromatique en fonction du marquage.

14. Dispositif selon l'une des revendications 12 ou 13, **caractérisé en ce que** le dispositif de prise de clichés est un dispositif de prise de clichés médical comme le tomodensitomètre (TDM), l'appareil d'imagerie par résonance magnétique (IRM), l'échographe, le tomographe à émission de positrons (TEP).

15. Dispositif selon l'une des revendications 12 à 14, **caractérisé en ce que** le périphérique d'entrée électronique comprend un système de navigation qui localise l'outil réel.

16. Dispositif selon l'une des revendications 12 à 14, **caractérisé en ce que** le périphérique d'entrée électronique comprend un appareil d'entrée tridimensionnelle, qui exerce de préférence une rétroaction de force sur la main de l'utilisateur.

17. Dispositif selon l'une des revendications 12 à 16, **caractérisé en ce que** la reproduction des images en couches bidimensionnelles s'effectue avec un dispositif d'affichage en trois dimensions, qui représente des vues stéréoscopiques, pour la reproduction d'un outil tridimensionnel, des vues stéréoscopiques de droite et de gauche d'au moins l'outil tridimensionnel étant montrées.

18. Dispositif selon l'une des revendications 12 à 17, **caractérisé en ce qu'**un modèle tridimensionnel correspondant à l'image en couches bidimensionnelle associée est représenté sur le moniteur.
